# FASCICULE DE BREVET EUROPEEN

(11) **EP 0 747 258 B1**
(45) Date de publication et mention de la délivrance du brevet: **10.10.2001**
(21) Numéro de dépôt: 96401183.7
(22) Date de dépôt: 04.06.1996
(51) Int. Cl.: B60N 2/28

(54) **Siège pour enfant à assise moulée**
Kindersitz mit geformten Sitzteil
Child seat with moulded seat part

(30) Priorité: 07.06.1995 FR 9506706
(43) Date de publication de la demande: 11.12.1996
(73) Titulaire: AMPAFRANCE S.A., 49309 Cholet (FR)
(72) Inventeur: Lefranc, Louis, 44000 Nantes (FR)
(74) Mandataire: Casalonga, Axel

(56) Documents cités:
- EP-A- 0 353 377
- EP-A- 0 447 097
- EP-A- 0 608 860
- DE-C- 4 108 660
- US-A- 4 033 622

## Description

La présente invention a pour objet un siège pour enfant comportant une partie d'assise et une partie de dossier, destiné à être posé et fixé sur un siège de véhicule automobile lui-même équipé d'une ceinture de sécurité à trois points (cf. par exemple EP-A-0 608 860, correspondant au préambule de la revendication indépendante).

Les sièges pour enfant de ce type peuvent être fixés de différentes manières au siège du véhicule automobile. Dans certains cas, la fixation se fait par une sangle spécifique qui vient s'accrocher sur les points d'ancrage des ceintures de sécurité du véhicule automobile. Une telle réalisation présente l'inconvénient d'obliger à prévoir des moyens spécifiques de fixation pour le siège d'enfant.

On connaît également des sièges pour enfant destinés à être utilisés dans un véhicule automobile qui sont fixés au siège du véhicule automobile au moyen de la ceinture de sécurité généralement à trois points, c'est-à-dire comportant une portion ventrale et une portion pectorale, dont le siège du véhicule est équipé d'origine. Le maintien en position du siège pour enfant se fait généralement en faisant passer la portion ventrale de la ceinture de sécurité du véhicule à travers des orifices pratiqués dans un support qui est posé sur le siège du véhicule et sur lequel est fixée, éventuellement avec des possibilités de réglage, la partie d'assise du siège pour enfant. La portion pectorale de la ceinture de sécurité du siège du véhicule peut passer au même endroit que la portion ventrale comme décrit par exemple dans la demande de brevet européen 447 097 (Britax). Dans d'autres réalisations, comme décrit par exemple dans la demande de brevet européen 353 377 (Concord), la portion pectorale de la ceinture de sécurité du véhicule passe derrière la partie de dossier du siège pour enfant dans un moyen de guidage dont ladite partie de dossier est munie. Le moyen de guidage peut également autoriser un blocage en position de la portion pectorale de la ceinture, de sécurité comme décrit dans la demande de brevet allemand publiée sous le n° 41 08 660. Un autre exemple est illustré par ladite demande de brevet européen EP-A-0 608 860.

La structure générale de ces sièges pour enfant de type connu est généralement assez complexe en raison de l'existence d'un support destiné à être posé sur le siège du véhicule automobile et recevant la partie d'assise du siège pour enfant. Des moyens peuvent être prévus pour permettre l'inclinaison du siège pour enfant par rapport au support maintenu sur le siège du véhicule.

On connaît également des sièges pour enfants qui sont directement posés sur le siège du véhicule automobile et dans lesquels l'enfant, déjà de taille suffisante, est maintenu par la ceinture de sécurité du véhicule, laquelle sert alors en même temps d'organe de retenue pour le siège d'enfant. Ce type de réalisation est cependant mal adpaté aux enfants plus jeunes âgés de 1 à 2 ans et d'un poids généralement compris entre 9 et 18 kg. En effet il est préférable de retenir ces enfants par un harnais spécifique. Dans ce cas, d'autres moyens doivent être prévus pour fixer le siège d'enfant sur le siège du véhicule.

La présente invention a pour objet un siège pour enfant destiné à être monté sur un siège de véhicule automobile dont la structure soit nettement plus simple à fabriquer que celle des sièges de type connu qui soit en outre plus facile à poser et à fixer sur le siège du véhicule automobile au moyen de la ceinture de sécurité dont celui-ci est équipé.

L'invention a également pour objet un siège de ce type dans lequel la fixation du siège pour enfant sur le siège du véhicule automobile soit particulièrement efficace et sûre.

L'invention a également pour objet un tel siège pour enfant qui puisse être utilisé avec des enfants en bas âge d'un poids généralement compris entre environ 9 et 18 kg, l'enfant étant maintenu sur son siège au moyen d'un harnais de sécurité dont le siège est équipé et qui est fixé par des moyens appropriés sur la partie de dossier et la partie d'assise du siège, la fixation du siège pour enfant sur le siège du véhicule automobile pouvant être modifiée lorsque l'enfant dépasse un poids d'environ 18 kg de façon qu'après retrait du harnais de sécurité du siège pour enfant, l'enfant puisse être maintenu sur son siège uniquement par la ceinture de sécurité du véhicule automobile.

Le siège pour enfant, tel qu'il est revendiqué, comporte une partie d'assise et une partie de dossier. Il est destiné à être posé et fixé sur un siège de véhicule automobile équipé d'une ceinture de sécurité à trois points comportant une portion ventrale et une portion pectorale, pouvant passer soit devant soit derrière la partie de dossier.

Selon l'invention, la partie d'assise comporte une surface inférieure adaptée pour être posée directement sur le siège du véhicule automobile et des surfaces latérales définissant les rebords de la partie d'assise. Lesdites surfaces latérales présentent des fentes ouvertes à travers la partie supérieure desquelles peut passer ladite portion ventrale. Lesdites fentes sont partiellement délimitées par des parties en forme de crochet, ces crochets comportent dans leur partie basse un bord d'appui pour la portion ventrale de la ceinture de sécurité. Un passage communique avec des ouvertures pour une sangle de bretelles d'un harnais de sécurité démontable, fixé à la partie de dossier du siège pour enfant.

Ainsi lorsque l'enfant présente un poids compris entre environ 9 et 18 kg de sorte qu'il convient de le maintenir sur son siège au moyen du harnais de sécurité dont le siège pour enfant est équipé, la portion ventrale de la ceinture de sécurité est placée sous la partie d'assise du siège. A cet effet le siège est tout d'abord posé directement par sa partie d'assise sur le siège du véhicule automobile à un endroit approprié. La ceinture de sécurité à trois points du véhicule est placée de façon que la portion ventrale passe au-dessus des rebords de la partie d'assise tandis que la portion pectorale passe derrière la partie de dossier. La ceinture est verrouillée sur le dispositif d'ancrage du véhicule puis, à partir de cette position, la portion ventrale de la ceinture de sécurité est glissée sur les rebords latéraux de la partie d'assise de façon à passer sous cette dernière, les parties latérales remontant par les fentes ouvertes avant de passer par les parties en forme de crochet.

La partie d'assise, et de ce fait le siège pour enfant dans son ensemble, se trouvent ainsi parfaitement maintenus en position fixe sur le siège du véhicule automobile à la fois par la portion ventrale de la ceinture de sécurité qui passe sous la partie d'assise et par la portion pectorale qui passe derrière la partie de dossier.

Si l'enfant est plus âgé et en particulier s'il est d'un poids supérieur à environ 18 kg ce qui correspond à une taille d'enfant plus importante, il est préférable que l'enfant soit maintenu sur son siège directement par la ceinture de sécurité du véhicule. Dans ce cas, le harnais de sécurité du siège d'enfant est retiré, la portion pectorale de la ceinture de sécurité du véhicule est passée devant l'enfant assis sur le siège et non plus derrière la partie de dossier du siège. La portion ventrale de la ceinture de sécurité est passée non plus sous la partie d'assise mais au contraire au-dessus de cette dernière, en étant maintenue par les deux parties en forme de crochet que comportent les surfaces latérales de la partie d'assise.

Ainsi le siège et l'enfant sont parfaitement maintenus dans le véhicule au moyen de la ceinture de sécurité dudit véhicule.

La partie de dossier comporte de préférence sur sa face arrière, un moyen de passage pour la portion pectorale de la ceinture de sécurité. Ce moyen de passage peut comprendre un moyen de blocage en position de la portion pectorale de la ceinture de sécurité.

Dans un mode de réalisation avantageux, la partie de dossier est articulée sur la partie d'assise pour permettre de placer la partie de dossier dans différentes inclinaisons tout en autorisant la séparation de la partie de dossier et de la partie d'assise afin de diminuer l'encombrement du siège lorsqu'il n'est pas utilisé

La partie d'assise est de préférence réalisée sous la forme d'une coque en matière synthétique moulée. Elle peut également être réalisée en tôle métallique formée.

L'invention sera mieux comprise à l'étude d'un mode de réalisation détaillé pris à titre d'exemple nullement limitatif et illustré par les figures annexées sur lesquelles :
la figure 1 est une vue en perspective montrant un siège pour enfant selon l'invention installé sur un siège de véhicule automobile pour un enfant de petite taille et d'un poids généralement compris entre 9 et 18 kg, le rembourrage du siège pour enfant n'ayant pas été représenté pour simplifier la figure;
la figure 2 est une vue en coupe de la coque en matière synthétique moulée constituant le siège pour enfant selon l'invention;
la figure 3 est une vue de dessous de la partie d'assise du siège; et
la figure 4 est une une vue en perspective analogue à celle de la figure 1 mais montrant le montage du siège pour un enfant de taille plus importante et d'un poids généralement supérieur à 18 kg.

Tel qu'il est illustré sur les figures annexées, le siège pour enfant selon l'invention référencé 1 dans son ensemble comprend une partie d'assise 2 et une partie de dossier 3 articulée par rapport à la partie d'assise au moyen d'un axe horizontal 4. Le siège 1 est placé sur un siège 5 de véhicule automobile qui est équipé d'une ceinture de sécurité à trois points référencée 6 dans son ensemble qui comporte une portion ventrale 7 fixée à un point d'ancrage 8 du véhicule en partie basse de la carrosserie et une portion pectorale 9 fixée à un point d'ancrage 10 solidaire de la carrosserie du véhicule en partie haute de celle-ci.

Comme cela est habituel, les portions ventrale 7 et pectorale 9 sont constituées par une seule et même sangle qui passe librement dans une boucle 11 qui peut être introduite dans un dispositif de verrouilage 12 solidaire de la carrosserie du véhicule, généralement au moyen d'une sangle 13 qui fait saillie entre l'assise et le dossier du siège 5 du véhicule.

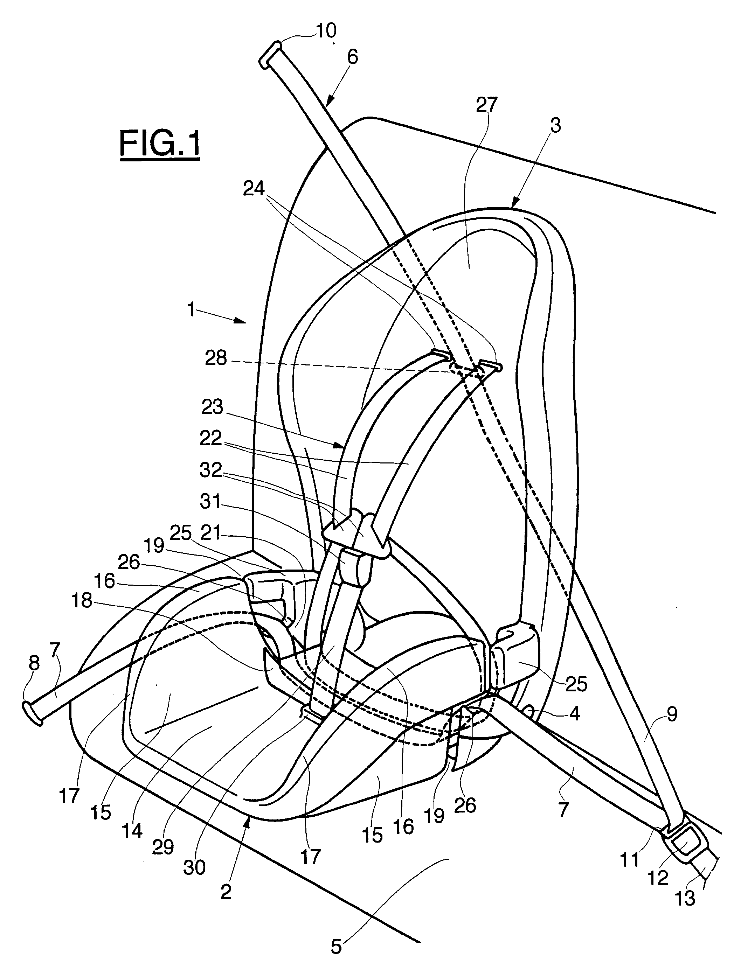

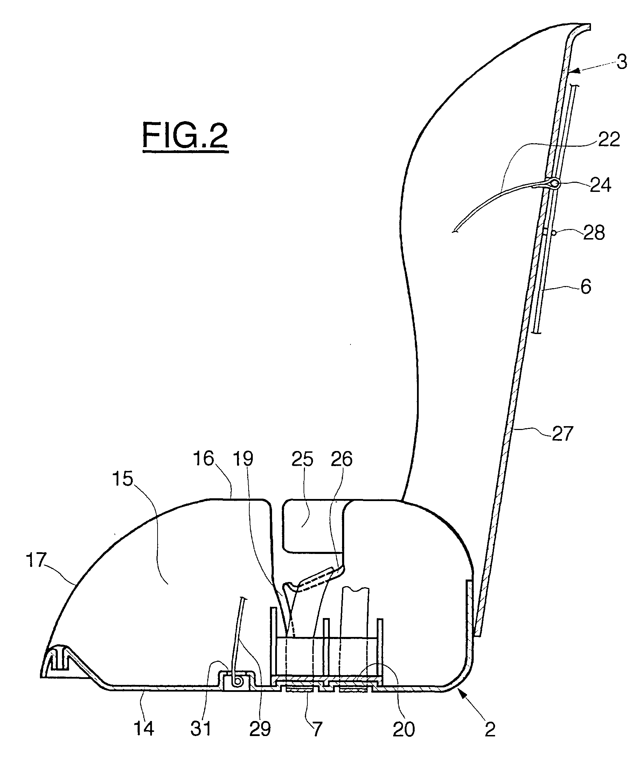

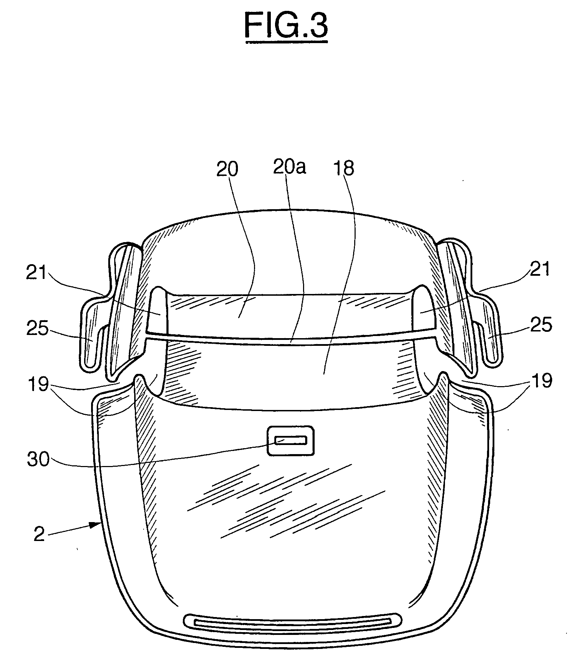

La partie d'assise 2 du siège 1 est réalisée dans l'exemple illustré sous la forme d'une coque en matière synthétique moulée visible plus particulièrement sur la vue en coupe de la figure 2 et la vue de dessous de la figure 3. La surface inférieure 14 de la partie d'assise 2 est adaptée pour être posée directement sur le siège 5 du véhicule comme on peut le voir sur la figure 1 sans qu'il y ait lieu de prévoir un support quelconque entre le siège 1 pour enfant et le siège 5 du véhicule. La partie d'assise 2 comporte également des surfaces latérales 15 symétriques identiques qui définissent des rebords 16 pour la partie d'assise. Ces rebords sont de préférence arrondis et inclinés dans leur partie avant 17 éloignée de la partie de dossier.

La surface inférieure 14 présente un passage 18 (figure 3) analogue à une sorte de gouttière communiquant avec deux fentes ouvertes 19 pratiquées dans les surfaces latérales 15 depuis les bords 16 jusqu'audit passage 18. La largeur du passage 18 est adaptée à celle de la ceinture de sécurité 6 et peut donc recevoir la portion ventrale 7.

La surface inférieure 14 comporte en outre un passage 20 communiquant avec des ouvertures 21. Le passage 20 est également en forme de goulotte et est adapté pour recevoir une sangle de bretelles 22 d'un harnais de sécurité référencé 23 dans son ensemble (figure 1). Les extrémités libres de la sangle de bretelles 22 sont fixées par les moyens de fixation 24 sur la partie de dossier 3 du siège 1 (figures 1 et 2). Les deux passages 18 et 20 sont de préférence séparés par une portion de cloison 20a qui ferme vers l'avant les ouvertures 21.

Le passage 18 est situé vers l'avant c'est-à-dire dans une position plus éloignée de la partie de dossier 3 que le passage 20. En variante, on peut supprimer la cloison 20a, les deux passages 18 et 20 étant alors définis par une seule et même zone de la surface 14, par exemple une seule gouttière. Les ouvertures 21 sont alors constituées par la partie arrière des fentes ouvertes 19.

Les surfaces latérales 15 comportent en outre des parties en forme de crochet 25 qui délimitent en partie un bord des fentes ouvertes 19. Chaque crochet 25 comporte dans sa partie basse un bord d'appui 26 sur lequel peut venir passer et s'appuyer la portion ventrale 7 de la ceinture de sécurité 6.

La partie de dossier 3 comporte sur sa face arrière 27 un moyen de passage 28 adapté pour permettre le guidage de la portion pectorale 9 de la ceinture de sécurité 6. Dans une variante, le moyen de passage 28 peut également comporter un dispositif de blocage en position de la portion pectorale 9 de la ceinture de sécurité 6.

Une sangle d'entre-jambes 29 est fixée de manière amovible sur la partie d'assise 2 par un moyen d'ancrage 30. La sangle d'entre-jambes porte la boucle de verrouillage 31 qui peut également recevoir des boucles 32 passant le long des branches de la sangle de bretelles 22 du harnais.

Il est ainsi possible, après que l'enfant ait été installé sur le siège, de refermer le harnais 23 en fixant l'ensemble des boucles 32 sur la boucle de verrouillage 31.

Le siège pour enfant selon l'invention peut être utilisé de deux manières différentes selon la taille de l'enfant.

Lorsque l'enfant est de petite taille et d'un poids généralement inférieur à 18 kg, il est nécessaire de le maintenir sur le siège 1 au moyen du harnais de sécurité 23. On place alors tout d'abord le siège 1 sur le siège du véhicule 5 comme illustré sur la figure 1. La ceinture de sécurité 6 du véhicule est déployée en faisant passer la partie pectorale 9 derrière la partie de dossier 3 et à travers le moyen de guidage 28. La portion ventrale 7 est placée sur les rebords latéraux 16 de la partie d'assise 2. La ceinture de sécurité 6 est verrouillée au moyen de la boucle de verrouillage 12. Puis la fixation du siège pour enfant 1 sur le siège du véhicule 5 est assurée en faisant simplement glisser la portion ventrale 7 le long des rebords latéraux 16 vers l'avant en suivant leur portion avant inclinée 17 ce qui permet de passer la portion ventrale 7 sous la surface inférieure 14 de la partie d'assise 2 dans le passage 18 puis de la remonter de chaque côté de la partie d'assise 2 par les fentes ouvertes 19 jusqu'à faire passer les deux parties latérales de la portion ventrale 7 sur les deux bords d'appui 26 comme illustré sur la figure 1. Le siège pour enfant 1 se trouve alors parfaitement maintenu d'une manière totalement sûre au moyen de la ceinture de sécurité 6 du véhicule lui-même. L'enfant peut alors être installé dans le siège 1 qui comporte bien entendu un rembourrage qui n'a pas été représenté sur la figure 1. L'enfant est attaché sur le siège 1 au moyen du harnais de sécurité 23. L'enfant se trouve ainsi parfaitement maintenu puisque le harnais de sécurité 23 est rendu solidaire du siège 1, la sangle de bretelles 22 passant en particulier sous l'assise 2 en étant maintenue dans le deuxième passage 20 de celle-ci.

Lorsque l'enfant est de taille plus importante et en particulier s'il dépasse un poids d'environ 18 kg, il est préférable de retirer le harnais de sécurité 23, ce qui se fait aisément grâce au fait que les moyens de fixation 24 et le moyen d'ancrage 30 permettent le démontage des sangles du harnais.

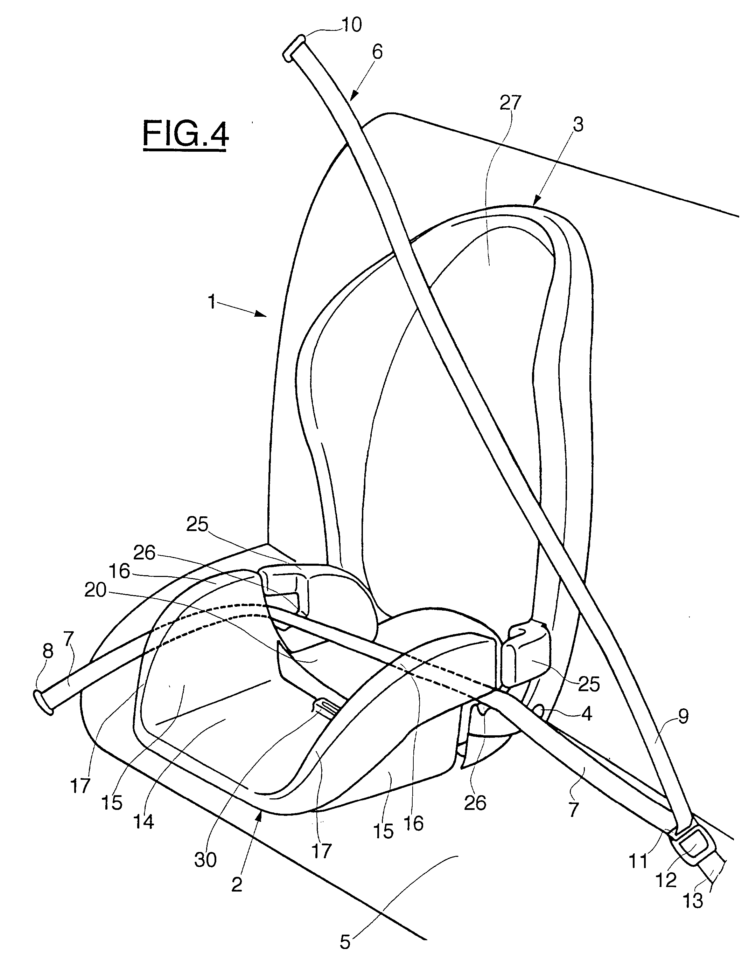

Le siège 1 est alors installé sur le siège du véhicule 5 comme illustré sur la figure 4. Comme précédemment l'assise 2 est directement posée sur le siège du véhicule 5. L'enfant est alors installé dans le siège. Puis la ceinture de sécurité 6 est accrochée sur la boucle de verrouillage 12, la portion pectorale 9 étant passée devant l'enfant et donc également devant la partie de dossier 3. La portion ventrale 7 est quant à elle passée au-dessus des cuisses de l'enfant puis déplacée depuis la partie supérieure des rebords 16 jusque sur les bords d'appui 26 en passant à travers la partie supérieure des fentes ouvertes 19 au droit des crochets 25.

L'enfant se trouve ainsi maintenu sur le siège 1 directement par les portions ventrale 7 et pectorale 9 de la ceinture de sécurité 6 du véhicule. Les crochets 25 assurent en cas d'accident un parfait maintien de l'enfant et du siège 1 par rapport au siège 5 du véhicule.

Dans un mode de réalisation préféré tel qu'illustré sur les figures, la partie de dossier 3 peut être inclinée dans différentes positions par rapport à la partie d'assise 2 au moyen de l'axe d'articulation 4, des moyens non illustrés sur les figures permettant de bloquer 1 partie de dossier en position appropriée.

L'invention permet ainsi d'obtenir un siège facile à installer et à utiliser et dont la fixation sur le siège du véhicule est particulièrement efficace quelle que soit la taille de l'enfant.

## Revendications

1. Siège pour enfant comportant une partie d'assise (2) et une partie de dossier (3), destiné à être posé et fixé sur un siège (5) de véhicule automobile équipé d'une ceinture de sécurité (6) à trois points comportant une portion ventrale (7) et une portion pectorale (9) pouvant passer soit devant soit derrière la partie de dossier (3) **caractérisé par** le fait que la partie d'assise (2) comporte une surface inférieure (14) adaptée pour être posée directement sur le siège (5) du véhicule automobile et des surfaces latérales (15) définissant les rebords de la partie d'assise, lesdites surfaces latérales (15) présentant des fentes ouvertes (19) à travers la partie supérieure desquelles (19) peut passer ladite portion ventrale (7), lesdites fentes (19) étant partiellement délimitées par des parties (25) en forme de crochet, ledit crochet comportant dans sa partie basse un bord d'appui pour la portion ventrale (7) de la ceinture de sécurité (6) et un passage (20) communicant avec des ouvertures (21) pour une sangle de bretelles (22) d'un harnais de sécurité démontable (23) fixé à la partie de dossier du siège pour enfant.

2. Siège pour enfant selon la revendication 1, **caractérisé par** le fait que la surface inférieure de la partie d'assise comprend en outre un autre passage (18) communiquant avec lesdites fentes ouvertes (19).

3. Siège pour enfant selon la revendication 2, **caractérisé par** le fait que l'autre passage (18) est situé dans une position plus éloignée de la partie de dossier (3), que le deuxième passage (20).

4. Siège pour enfant selon la revendication 2 ou 3, **caractérisé par** le fait que les deux passages sont séparés par une paroi (20a).

5. Siège pour enfant selon la revendication 4, **caractérisé par** le fait que la paroi (20a) séparant les deux passages délimite les ouvertures (21) pour la sangle de bretelles, ces ouvertures étant fermées.

6. Siège pour enfant selon l'une quelconque des revendications précédentes, **caractérisé par** le fait que la partie de dossier (3) comporte, sur sa face arrière, un moyen de passage (28) pour la portion pectorale (9) de la ceinture de sécurité.

7. Siège pour enfant selon la revendication 6, **caractérisé par** le fait que le moyen de passage (28) comprend un moyen de blocage en position de La portion pectorale de la ceinture de sécurité.

8. Siège pour enfant selon l'une quelconque des revendications précédentes, **caractérisé par** le fait que la partie de dossier (3) est articulée sur la partie d'assise (2) pour permettre de placer la partie de dossier dans différentes inclinaisons.

9. Siège pour enfant selon l'une quelconque des revendications précédentes, **caractérisé par** le fait que la partie d'assise (2) comprend un moyen d'ancrage (30) pour une sangle d'entrejambes (29) du harnais de sécurité (23).

10. Siège pour enfant selon l'une quelconque des revendications précédentes, **caractérisé par** le fait que les moyens de fixation (24) et d'ancrage (30) du harnais de sécurité sont tels que le harnais de sécurité (23) puisse être détaché du siège pour enfant.

11. Siège pour enfant selon l'une quelconque des revendications précédentes, **caractérisé par** le fait que la partie d'assise (2) est réalisée sous la forme d'une coque en matière synthétique moulée.

## Claims

1. Child seat comprising a seat part (2) and a backrest part (3), intended to be placed on and secured to a motor vehicle seat (5) equipped with a three-point seatbelt (6) having a lap portion (7) and a diagonal portion (9) capable of passing either in front of or behind the backrest part (3), **characterized in that** the seat part (2) comprises an underside (14) designed to be placed directly on the motor vehicle seat (5), and lateral surface (15) defining the rims of the seat part, the said lateral surfaces (15) having open slots (19) through the upper part of which (19) the said lap portion (7) can pass, the said slots (19) being partially delimited by hook-shaped parts (25), the said hook comprising, in its bottom part, a bearing edge for the lap portion (7) of the seatbelt (6) and a passage (20) communicating with openings (21) for shoulder straps (22) of a removable safety harness (23) secured to the backrest part of the child seat.

2. Child seat according to Claim 1, **characterized in that** the underside of the seat part further comprises another passage (18) communicating with the said open slots (19).

3. Child seat according to Claim 2, **characterized in that** the other passage (18) is situated in a position further from the backrest part (3) than the second passage (20).

4. Child seat according to Claim 2 or 3, **characterized in that** the two passages are separated by a wall (20a).

5. Child seat according to Claim 4, **characterized in that** the wall (20a) separating the two passages delimits the openings (21) for the shoulder straps, these openings being closed.

6. Child seat according to any one of the preceding claims, **characterized in that** the backrest part (3) comprises, on its back face, a passage means (28) for the diagonal portion (9) of the seatbelt.

7. Child seat according to Claim 6, **characterized in that** the passage means (28) comprises a means of locking the diagonal portion of the seatbelt in position.

8. Child seat according to any one of the preceding claims, **characterized in that** the backrest part (3) is articulated to the seat part (2) so as to allow the backrest part to be given different inclinations.

9. Child seat according to any one of the preceding claims, **characterized in that** the seat part (2) comprises an anchoring means (30) for a crotch strap (29) of the safety harness (23).

10. Child seat according to any one of the preceding claims, **characterized in that** the means of securing (24) and anchoring (30) the safety harness are such that the safety harness (23) can be detached from the child seat.

11. Child seat according to any one of the preceding claims, **characterized in that** the seat part (2) is produced in the form of a moulded synthetic shell.

## Patentansprüche

1. Kindersitz mit einem Sitzteil (2) und einem Rücklehnenteil (3), der zum Aufsetzen auf und zum Befestigen an einem Kraftfahrzeugsitz (5) eingerichtet ist, welcher mit einem ein Beckenteil (7) und ein Schrägschulterteil (9) aufweisenden Dreipunkt-Sicherheitsgurt (6) ausgerüstet ist, welcher sowohl vor als auch hinter dem Rücklehnenteil (3) vorbeigeführt werden kann, **dadurch gekennzeichnet, dass** das Sitzteil (2) eine zur unmittelbaren Auflage auf dem Kraftfahrzeugsitz (5) eingerichtete Unterseite (14) und Seitenwangen (15) aufweist, welche die Randleisten des Sitzteiles ausbilden, wobei die Seitenwangen (15) offene Schlitze (19) aufweisen, durch deren oberen Abschnitt das Beckenteil (7) verlaufen kann, wobei die Schlitze (19) teilweise durch hakenförmige Teile (25) begrenzt sind, jeder Haken an seinem Unterteil einen Auflagerand für das Beckenteil (7) des Sicherheitsgurtes (6) aufweist und ein mit Öffnungen (21) in Verbindung stehender Durchlass (20) für einen Hosenträgergurt (22) eines Sicherheitsgeschirres vorgesehen ist, das an dem Rücklehnenteil des Kindersitzes abnehmbar befestigt ist.

2. Kindersitz nach Anspruch 1, **dadurch gekennzeichnet, dass** die Unterseite des Sitzteiles außerdem einen weiteren, mit den offenen Schlitzen (19) in Verbindung stehenden Durchlass (18) aufweist.

3. Kindersitz nach Anspruch 2, **dadurch gekennzeichnet, dass** der andere Durchlass (18) an einer von dem Rücklehnenteil (3) weiter entfernten Stelle als der zweite Durchlass (20) angeordnet ist.

4. Kindersitz nach Anspruch 2 oder 3, **dadurch gekennzeichnet, dass** die beiden Durchlässe durch eine Wand (20a) voneinander getrennt sind.

5. Kindersitz nach Anspruch 4, **dadurch gekennzeichnet, dass** die die beiden Durchlässe voneinander trennende Wand (20a) die Öffnungen (21) für den Hosenträgergurt begrenzt, wobei diese Öffnungen umschlossen sind.

6. Kindersitz nach einem der vorhergehenden Ansprüche, **dadurch gekennzeichnet, dass** das Rücklehnenteil (3) auf seiner Rückseite ein Durchlassmittel (28) für das Schulterteil (9) des Sicherheitsgurtes aufweist.

7. Kindersitz nach Anspruch 6, **dadurch gekennzeichnet, dass** das Durchlassmittel (28) ein Mittel zur lagefesten Verriegelung des Schulterteils des Sicherheitsgurtes aufweist.

8. Kindersitz nach einem der vorhergehenden Ansprüche, **dadurch gekennzeichnet, dass** das Rücklehnenteil (3) an dem Sitzteil (2) derart angelenkt ist, dass das Rücklehnenteil in verschiedene Neigungslagen überführt werden kann.

9. Kindersitz nach einem der vorhergehenden Ansprüche, **dadurch gekennzeichnet, dass** das Sitzteil (2) ein Verankerungsmittel (30) für einen zwischen den Beinen durchgehenden Gurt (29) des Sicherheitsgeschirrs (23) aufweist.

10. Kindersitz nach einem der vorhergehenden Ansprüche, **dadurch gekennzeichnet, dass** die Befestigungsmittel (24) und die Verriegelungsmittel (30) des Sicherheitsgeschirrs derart ausgebildet sind, dass das Sicherheitsgeschirr (23) von dem Kindersitz abgenommen werden kann.

11. Kindersitz nach einer der vorhergehenden Ansprüche, **dadurch gekennzeichnet, dass** das Sitzteil (2) in Gestalt einer Schale aus geformtem Kunststoff hergestellt ist.
